Europäisches Patentamt

European Patent Office

Office européen des brevets

(11) Veröffentlichungsnummer: **0 087 600**
**B1**

(12) **EUROPÄISCHE PATENTSCHRIFT**

(45) Veröffentlichungstag der Patentschrift:
04.06.86

(21) Anmeldenummer: **83100900.6**

(22) Anmeldetag: **01.02.83**

(51) Int. Cl.⁴: **F 24 J 2/24**

(54) Wärmetauscher für Wärmepumpen.

(30) Priorität: **25.02.82 DE 3206701**

(43) Veröffentlichungstag der Anmeldung:
**07.09.83 Patentblatt 83/36**

(45) Bekanntmachung des Hinweises auf die Patenterteilung:
**04.06.86 Patentblatt 86/23**

(84) Benannte Vertragsstaaten:
**AT BE CH DE FR GB IT LI LU NL SE**

(56) Entgegenhaltungen:
**DE - A - 2 245 153**
**DE - A - 2 814 004**
**DE - A - 2 826 937**
**DE - A - 2 940 838**
**DE - A - 3 000 289**
**FR - A - 2 380 511**
**FR - A - 2 390 557**
**FR - A - 2 395 469**
**FR - A - 2 454 074**
**GB - A - 1 555 485**
**GB - A - 2 026 679**
**US - A - 3 194 228**
**US - A - 3 369 539**
**US - A - 4 158 357**
**US - A - 4 164 933**
**US - A - 4 222 373**
**US - A - 4 300 539**

(73) Patentinhaber: **Grötz, Franz GmbH & Co.KG**
**Bauunternehmung, Jahnstrasse 19, D-7560 Gaggenau**
**(DE)**

(72) Erfinder: **Klusch, Siegfried, Talhauser-Strasse 23,**
**D-7801 Ebringen (DE)**

(74) Vertreter: **Ratzel, Gerhard, Dr., Seckenheimer**
**Strasse 36a, D-6800 Mannheim 1 (DE)**

## Beschreibung

Die Erfindung betrifft einen Wärmetauscher für Wärmepumpen oder für die direkte Erwärmung von Brauchwasser, aus wenigstens einer flächenförmigen Baueinheit aus abbindenden spritz- und/oder giessbaren mit Metall- oder Fasermatten armierten Mineralbestandteilen und mit einem integrierten Leitungssystem zum Durchtritt eines Wärmeträgers.

Ein solcher Wärmetauscher ist aus der DE-A 3 000 289 bekannt. Diese DE-A 3 000 289 betrifft ein Verfahren und eine Vorrichtung zur Gewinnung bzw. Nutzung von Umweltwärme, wobei ein aus Beton oder ähnlichem Material gegossenes Dach, das auch selbsttragend sein kann und das mehrteilig industriell gefertigt und transportiert werden kann, beschrieben ist, das dadurch gekennzeichnet ist, dass es so ausgebildet ist, dass es äusserlich den gebräuchlichen Dächern in seiner Oberflächenstruktur entspricht, in dem sich jedoch im Inneren der Dachflächen Rohrleitungen befinden, die von einer Flüssigkeit durchströmt wird, die die, durch die Sonneneinstrahlung oder Umweltwärme, vom Energie-Dach aufgenommene Wärmemenge auf das in den Rohrleitungen befindliche Medium überträgt, welches durch entsprechende Rohrleitungen einem Wärmetauscher zugeführt wird, wo es weiter als Heizmedium Verwendung finden kann, wobei ausserdem dieser Vorgang umkehrbar ist, so dass eventuell auf dem Dach liegender Schnee, der die Wärmestrahlung abschirmt, abgeschmolzen wird, um wiederum Wärme zu gewinnen.

Der Erfindung liegt die Aufgabe zugrunde, einen Wärmetauscher der eingangs genannten Gattung zu schaffen, mit dem eine Wärmepumpenanlage wirtschaftlich optimal betrieben werden kann, so dass insbesondere der Kompressor der Wärmepumpe auf der für ihn zulässigen Kennlinie optimal arbeiten kann.

Dabei soll der Wärmetauscher auch einfach und kostensparend herstellbar sein.

Diese Aufgabe wird durch folgende Merkmale gelöst:

1. der Wärmetauscher ist tunnelartig ausgebildet,
2. die Innenseite des Wärmetauschers kann von der Umgebungsluft kontrolliert beaufschlagt werden.

Ein solcher Wärmetauscher-Tunnel kann auf seiner Aussenseite Wärme von der Umgebungsluft oder der Sonneneinstrahlung aufnehmen. Die Innenfläche des Tunnels kann über regelbare, mechanische Mittel, z.B. Ventilatoren und Schikanen mit einer beliebigen Luftmenge beaufschlagt werden.

Gemäss einer besonders bevorzugten Ausführungsform ist die flächenförmige Baueinheit als eine mit Luftkanälen versehene Doppelschale ausgestaltet, in deren Aussenwände als auch deren Innenwände das Leitungssystem zum Durchtritt des Wärmeträgers integriert ist. Damit wird insbesondere in Fällen mit begrenzten Platzverhältnissen Vergrösserung der Austauschoberfläche erzielt.

Zur weiteren Verbesserung des Wärmeaustausches mit der Umgebungsluft weist der Wärmeaustauscher auf seinen nach aussen gerichteten Flächen radiale Rippen oder Wellen und/oder auf seinen nach innen gerichteten Flächen axiale Rippen oder Wellen auf. Dies gilt auch im Falle der Ausführungsform des Wärmetauschers als Doppelschale.

Ausführungsbeispiele der Erfindung sind in den Zeichnungen dargestellt. Darin zeigt:

Figur 1 die perspektivische Ansicht eines erfindungsgemässen Wärmetauscher-Tunnels;
Figur 2 einen Wärmetauscher-Tunnel aus Doppelschalen;
Figur 3 den Wärmetauscher in Form eines Knickdaches;
Figur 4 den Wärmetauscher in Form eines Satteldaches.

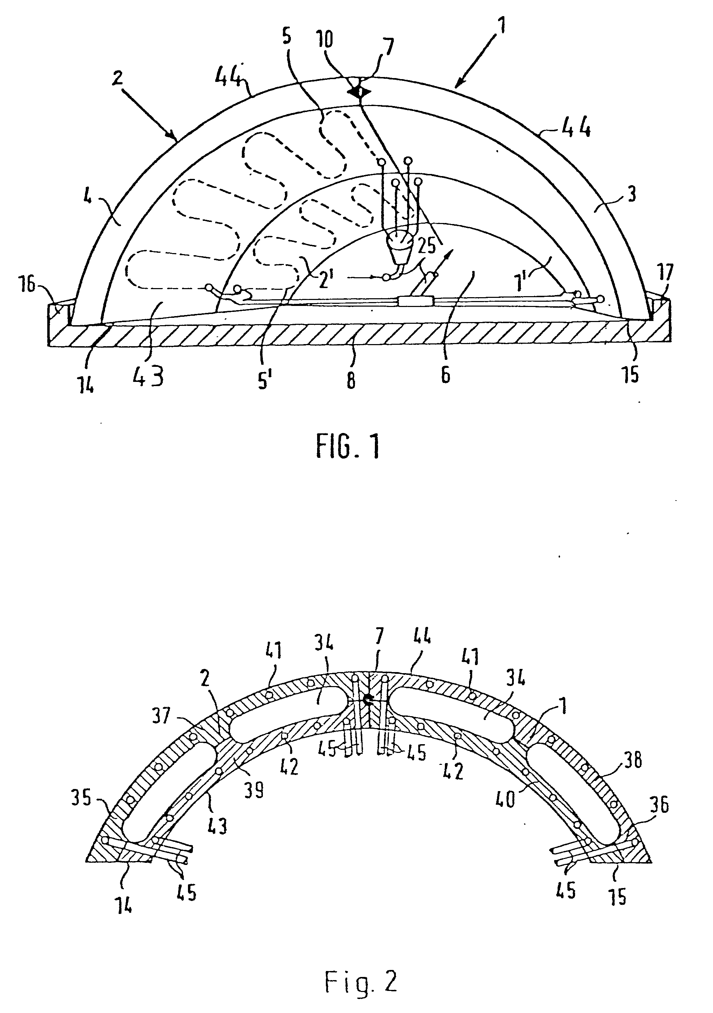

In Figur 1 ist ein tunnelartiger Wärmetauscher in perspektivischer Ansicht gezeigt. Er besteht aus den beiden Halbteilen 1 und 2. In den Wänden 3 und 4 der Halbteile 1 und 2 sind Rohrschlangen 5 zur Bildung eines integrierten Leitungssystems zum Durchtritt eines Wärmeträgers angeordnet. Die beiden symmetrischen Halbteile 1 und 2 sind in der Weise zusammengesetzt, dass sich ein Gewölbetunnel 6 ergibt. Anstelle eines solchen runden Gewölbetunnels, kann der Wärmetauscher auch knickdachartig (26) ausgebildet sein. Dabei müssen die Halbteile nicht notwendigerweise zueinander symmetrisch sein. In dem dargestellten Ausführungsbeispiel berühren sich die beiden Halbteile 1 und 2 in einer senkrechten Gewölbeschliessebene 7. Als zentrierendes Mittel ist in der Mitte der Gewölbeschliessebene 7 ein winkeliges Rohr 10 eingesetzt. Dieses winkelige Rohr 10 dient dazu, die Gewölbehalbteile statisch festzulegen. Um ein Auseinanderstreben der beiden Halbteile 1 und 2 zu verhindern, sind an ihren Fussebenen 14 und 15 Leisten 16 und 17 angeordnet. Diese Leisten 16 und 17 oder ähnliche Verankerungen sind an dem Unterbau 8, beispielsweise einem Fundament oder einer Dachkonstruktion befestigt. Das aus den beiden Halbteilen 1 und 2 bestehende Gewölbe kann durch Aneinanderreihung mehrerer entsprechend zusammengesetzter Halbteile beliebig oft verlängert werden. In Figur 1 ist dies durch die beiden Halbteile 1' und 2' geschehen.

Die nach aussen gerichteten Flächen 44 können radiale Rippen oder Wellen zur Vergrösserung der Oberfläche aufweisen, so dass der Wärmeaustausch mit der Umgebung erhöht wird. Die nach innen gerichteten Flächen 43 des Gewölbetunnels 6 können ebenfalls mit axialen Rippen oder Wellen versehen sein. Die Rohrschlangen 5 und 5' werden vorzugsweise mittels der Anschlüsse 25 mit dem Wärmeträger versorgt.

In Figur 2 ist ein Wärmetauscher als Doppelschalensystem dargestellt, die beiden symmetri-

schen Halbteile 1 und 2 bestehen hier aus zwei Doppelschalen 35 und 36. Die Aussenwände 37 und 38 der Doppelschalen 35 und 36 enthalten Rohrschlangen 41. Die Innenwände 39 und 40 der Doppelschalen 35 und 36 enthalten ebenfalls Rohrschlangen 42. Die Aussenwände 37 und 38 sowie die Innenwände 39 und 40 sind durch Luftkanäle 34 getrennt. Die nach innen gerichteten Flächen 43 und die Luftkanäle 34 können axiale Rippen oder Wellen, die nach aussen gerichteten Flächen 44 radiale Rippen oder Wellen aufweisen. Mittels dieses Doppelschalensystems wird eine Verdoppelung der Austauschoberfläche erreicht, was zu erheblichen Platzersparnissen führt. Die Anschlussrohrenden 45 der gleich langen Rohrschlangen 41 und 42 sind so nebeneinander herausgeführt, dass die Anschlussarbeiten an denselben leicht ausgeführt werden können. Mechanische Mittel z.B. Ventilatoren, bewirken dabei die Hindurchleitung der Luft z.B. durch Gebläsewirkung.

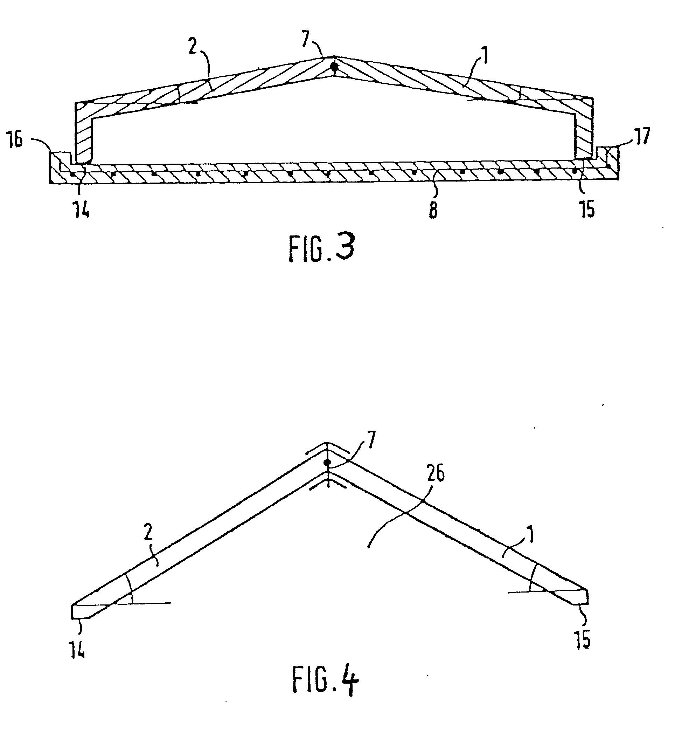

Der Wärmetauscher muss nicht zwangsläufig tunnelartig ausgebildet sein. Er kann auch die Form eines Satteldaches aufweisen, wie in Figur 4 dargestellt.

In Figur 3 ist der Wärmetauscher in Form eines Knickdaches dargestellt.

### Patentansprüche

1. Wärmetauscher für Wärmepumpen oder für die direkte Erwärmung von Brauchwasser, aus wenigstens einer flächenförmigen Baueinheit aus abbindenden spritz- und/oder giessbaren mit Metall- oder Fasermatten armierten Mineralbestandteilen und mit einem integrierten Leitungssystem zum Durchtritt eines Wärmeträgers, gekennzeichnet durch folgende Merkmale:

1. der Wärmetauscher ist tunnelartig ausgebildet,
2. die Innenseite des Wärmetauschers kann von der Umgebungsluft kontrolliert beaufschlagt werden.

2. Wärmetauscher nach Anspruch 1, dadurch gekennzeichnet, dass die flächenförmige Baueinheit als eine mit Luftkanälen (34) versehene Doppelschale (35, 36) ausgestaltet ist, in deren Aussenwände (37, 38) als auch deren Innenwände (39, 40) das Leitungssystem integriert ist.

3. Wärmetauscher nach Anspruch 1 oder 2, dadurch gekennzeichnet, dass die nach aussen gerichteten Flächen (44) des Wärmetauschers radiale Rippen oder Wellen und/oder die nach innen gerichteten Flächen axiale Rippen oder Wellen aufweisen.

## Claims

1. A heat exchanger for heat pumps or for the direct heating of process water, comprising at least one flat structural unit of hardening injection mouldable and/or castable mineral constituents reinforced with metallic or fibrous mats and with an integrated duct system for the passage of a heat-transfer medium, characterised by the following features:

1. the heat exchanger is of tunnel-like construction;
2. the inside of the heat exchanger can be acted upon by ambient air in a controlled manner.

2. A heat exchanger according to Claim 1, characterised in that the flat structural unit is designed as a double shell (35, 36) provided with air ducts (34), the duct system being integrated in its outer walls (37, 38) and also in its inner walls (39, 40).

3. A heat exchanger according to Claim 1 or 2, characterised in that the outwardly directed surfaces (44) of the heat exchanger have radial ribs or corrugations and/or the inwardly directed surfaces have axial ribs or corrugations.

## Revendications

1. Echangeur de chaleur pour pompes à chaleur ou pour le chauffage direct d'eaux industrielles, comprenant au moins une unité modulaire plane se composant de constituants minéraux extrudables et/ou coulables durcissants armés de mats de métal ou de fibres, et comportant un réseau de canalisations intégré destiné au passage d'un agent caloporteur, caractérisé par les caractéristiques suivantes:

1. L'échangeur de chaleur est en forme de tunnel;
2. L'air environnant peut être admis de façon contrôlée à l'intérieur de l'échangeur de chaleur.

2. Echangeur de chaleur selon la revendication 1, caractérisé en ce que l'unité modulaire plane est réalisée sous la forme d'une double coque (35, 36) comportant des canaux à air (34), dans les parois extérieures (37, 38) comme dans les parois intérieures (39, 40) de laquelle est intégré le réseau de canalisations.

3. Echangeur de chaleur selon la revendication 1 ou la revendication 2, caractérisé en ce que les surfaces (44) dirigées vers l'extérieur de l'échangeur de chaleur comportent des nervures ou des cannelures radiales et/ou les surfaces dirigées vers l'intérieur comportent des nervures ou des cannelures axiales.

FIG. 1

Fig. 2

FIG.3

FIG.4